# EUROPEAN PATENT APPLICATION

(11) **EP 4 830 972 A1**
(43) Date of publication of application: **28.10.2026**
(21) Application number: 26172215.1
(22) Date of filing: 14.04.2026
(51) Int. Cl.: B60K 35/81, B60K 31/00, B60K 35/22, B60K 35/28, B60K 35/29, B60W 30/14, B60W 50/14

(54) **VEHICLE DISPLAY CONTROL DEVICE, VEHICLE DISPLAY CONTROL METHOD, AND STORAGE MEDIUM**

(30) Priority: 24.04.2025 JP 2025072720
(71) Applicant: Toyota Jidosha Kabushiki Kaisha, Toyota-shi, Aichi-ken 471-8571 (JP)
(72) Inventor: NISHIDA, Takashi, TOYOTA-SHI, AICHI-KEN, 471-8571 (JP); KONISHI, Shogo, TOYOTA-SHI, AICHI-KEN, 471-8571 (JP); HATTORI, Tsutomu, TOYOTA-SHI, AICHI-KEN, 471-8571 (JP); TAKADA, Arata, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A vehicle display control device includes: a memory; and a processor that is configured to: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effect display, at a display region provided at the vehicle, of a preceding vehicle image simulating the preceding vehicle and a preceding-preceding vehicle image simulating the preceding-preceding vehicle, wherein at least one of the preceding vehicle image or the preceding-preceding vehicle image is displayed in an emphasized manner.

## Description

### BACKGROUND

### Technical Field

The technique of the disclosure relates to a vehicle display control device, a vehicle display control method, and a non-transitory storage medium for a vehicle display control program.

### Related Art

Japanese Patent Application Laid-Open No. 2024-043822 discloses an attention alert system that communicates, to a driver of a vehicle, the magnitude of a collision risk between the vehicle and a preceding vehicle, which changes over time, in a manner highly consistent with the subjectivity of the driver. This attention alert system includes a Time Headway (THW) acquisition unit that repeatedly acquires a time headway, which is a value obtained by dividing the inter-vehicle distance between the vehicle and a preceding vehicle by the vehicle speed of the vehicle, at a predetermined time interval; a Time to Collision (TTC) acquisition unit that repeatedly acquires a time to collision, which is a value obtained by dividing the inter-vehicle distance by the relative speed between the vehicle and the preceding vehicle, at a predetermined time interval; and a report unit that outputs, to an occupant of the vehicle, a proximity warning reporting proximity to a preceding vehicle, based on the inter-vehicle time and the time to collision, the report unit determining a saliency level, which is the degree of saliency of the proximity warning, in accordance with the inter-vehicle time and the time to collision, and outputting the proximity warning of the determined saliency level.

When implementing a proximity warning due to sudden deceleration by a vehicle ahead of a preceding vehicle at a display area provided at the vehicle, when the display of the preceding vehicle and the display of the vehicle ahead of the preceding vehicle overlap, it may be difficult to visually perceive the warning display with respect to the display of the vehicle ahead of the preceding vehicle. In such a case, a situation may arise in which the warning regarding the vehicle ahead of the preceding vehicle is not perceived by the vehicle occupant. In other words, there is room for improvement in terms of making vehicle occupants aware of a warning regarding a vehicle ahead of a preceding vehicle.

### SUMMARY

The present disclosure provides a vehicle display control device, a vehicle display control method, and a non-transitory storage medium for a vehicle display control program that is able to make a driver aware of a warning related to a vehicle ahead of a preceding vehicle.

A first aspect of the disclosure is a vehicle display control device including a display control unit that is configured to: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effect display, in an emphasized manner, of a preceding vehicle image simulating the preceding vehicle, and effect display of a preceding-preceding vehicle image simulating the preceding-preceding vehicle, at a display region provided at the vehicle.

According to the first aspect, in a case in which the approach speed of the preceding-preceding vehicle is equal to or greater than a predetermined threshold value, by effecting display, in an emphasized manner, of a preceding vehicle image simulating the preceding vehicle that is closer to the vehicle than the preceding-preceding vehicle, the vehicle occupant may be made aware of a warning pertaining to the preceding-preceding vehicle.

A second aspect of the disclosure is a vehicle display control device including a display control unit that is configured to: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effect display of a preceding vehicle image simulating the preceding vehicle, effect display, in an emphasized manner of a first aspect, of a preceding-preceding vehicle image simulating the preceding-preceding vehicle, at a display region provided at the vehicle, and in a case in which the preceding vehicle image and the preceding-preceding vehicle image are in a positional relationship such that they are displayed overlapping with each other, effect display, in an emphasized manner of a second aspect different from the first aspect, of the preceding-preceding vehicle image.

According to the second aspect, in a case in which the approach speed of the preceding-preceding vehicle is equal to or greater than a predetermined threshold value, and in a case in which the preceding vehicle image and the preceding-preceding vehicle image are in a positional relationship such that they are displayed overlapping with each other, the preceding-preceding vehicle image is displayed in an emphasized manner of a second aspect (for example, an icon is displayed above the preceding-preceding vehicle image), as a result of which the vehicle occupant may be made aware of a warning pertaining to the preceding-preceding vehicle.

A third aspect of the disclosure is a vehicle display control device according to any of the above-described aspects, wherein the display control unit is configured to effect display, in an emphasized manner, of both of the preceding vehicle image and the preceding-preceding vehicle image.

According to the third aspect, the vehicle occupant may perceive that attention is required with respect to preceding vehicles including the preceding-preceding vehicle.

A fourth aspect of the disclosure is a vehicle display control device according to any of the above-described aspects, wherein the display control unit is configured to effect display, in an emphasized manner, of the preceding vehicle image in a case in which the preceding vehicle image and the preceding-preceding vehicle image are in a positional relationship such that they are displayed overlapping with each other.

According to the fourth aspect, since the preceding vehicle image, which is displayed overlapping with the preceding-preceding vehicle image, is displayed in an emphasized manner, the attention of the vehicle occupant may be directed to a sequence of the preceding vehicle and the preceding-preceding vehicle.

A fifth aspect of the disclosure is a vehicle display control device according to any of the above-described aspects, wherein: the preceding vehicle image comprises an image simulating the preceding vehicle when the preceding vehicle is viewed from a predetermined virtual viewpoint, the preceding-preceding vehicle image comprises an image simulating the preceding-preceding vehicle when the preceding-preceding vehicle is viewed from the virtual viewpoint, and the display control unit is configured to effect display of the preceding vehicle image and the preceding-preceding vehicle image by setting an angle of the virtual viewpoint such that the preceding vehicle image and the preceding-preceding vehicle image do not overlap each other.

According to the fifth aspect, since display is effected of the preceding vehicle image and the preceding-preceding vehicle image at separated positions while maintaining the positional relationship between the preceding vehicle and the preceding-preceding vehicle, the vehicle occupant may separately perceive the state of the preceding vehicle image and the state of the preceding-preceding vehicle.

A sixth aspect of the disclosure is a vehicle display control device according to any of the above-described aspects, wherein the display control unit is configured to effect display such that at least a predetermined distance is maintained between the preceding vehicle image and the preceding-preceding vehicle image.

According to the sixth aspect, the vehicle occupant may perceive the entirety of the preceding-preceding vehicle.

A seventh aspect of the disclosure is a vehicle display control device according to any of the above-described aspects, wherein the display control unit is configured to effect display of a vehicle image simulating the vehicle, and to effect display such that at least a predetermined distance is maintained between the vehicle image and the preceding vehicle image.

According to the seventh aspect, the vehicle occupant may perceive the entirety of the preceding vehicle image.

An eighth aspect of the disclosure is a vehicle display control device according to any of the above-described aspects, wherein the display control unit is configured to effect display of a vehicle image simulating the vehicle, and to effect display such that at least a predetermined distance is maintained between the vehicle image and the preceding-preceding vehicle image.

According to the eighth aspect, since the vehicle image and the receding-preceding vehicle image are displayed with the distance between them maintained, the vehicle occupant may easily perceive the state of the receding-preceding vehicle image.

A ninth aspect of the disclosure is a vehicle display control method including a computer executing processing including: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effecting display, in an emphasized manner, of a preceding vehicle image simulating the preceding vehicle, and effecting display of a preceding-preceding vehicle image simulating the preceding-preceding vehicle, at a display region provided at the vehicle.

According to the ninth aspect, the vehicle occupant may be made aware of a warning pertaining to the preceding-preceding vehicle.

A tenth aspect of the disclosure is a vehicle display control method including a computer executing processing including: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effecting display of a preceding vehicle image simulating the preceding vehicle, effecting display, in an emphasized manner of a first aspect, of a preceding-preceding vehicle image simulating the preceding-preceding vehicle, at a display region provided at the vehicle, and in a case in which the preceding vehicle image and the preceding-preceding vehicle image are in a positional relationship such that they are displayed overlapping with each other, effecting display, in an emphasized manner of a second aspect different from the first aspect, of the preceding-preceding vehicle image.

According to the tenth aspect, the vehicle occupant may be made aware of a warning pertaining to the preceding-preceding vehicle.

An eleventh aspect is a non-transitory storage medium storing a program executable by a computer to perform vehicle display control processing, the processing including: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effecting display, in an emphasized manner, of a preceding vehicle image simulating the preceding vehicle, and effecting display of a preceding-preceding vehicle image simulating the preceding-preceding vehicle, at a display region provided at the vehicle.

According to the eleventh aspect, the vehicle occupant may be made aware of a warning pertaining to the preceding-preceding vehicle.

A twelfth aspect is a non-transitory storage medium storing a program executable by a computer to perform vehicle display control processing, the processing including: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effecting display of a preceding vehicle image simulating the preceding vehicle, effecting display, in an emphasized manner of a first aspect, of a preceding-preceding vehicle image simulating the preceding-preceding vehicle, at a display region provided at the vehicle, and in a case in which the preceding vehicle image and the preceding-preceding vehicle image are in a positional relationship such that they are displayed overlapping with each other, effecting display, in an emphasized manner of a second aspect different from the first aspect, of the preceding-preceding vehicle image.

According to the twelfth aspect, the vehicle occupant may be made aware of a warning pertaining to the preceding-preceding vehicle.

A thirteenth aspect of the present disclosure is a vehicle display control device, including: a memory; and a processor that is configured to: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effect display, at a display region provided at the vehicle, of a preceding vehicle image simulating the preceding vehicle and a preceding-preceding vehicle image simulating the preceding-preceding vehicle, wherein at least one of the preceding vehicle image or the preceding-preceding vehicle image is displayed in an emphasized manner.

A fourteenth aspect of the present disclosure is a method of vehicle display control comprising processing executed by a computer, the processing including: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effecting display, at a display region provided at the vehicle, of a preceding vehicle image simulating the preceding vehicle and a preceding-preceding vehicle image simulating the preceding-preceding vehicle, wherein at least one of the preceding vehicle image or the preceding-preceding vehicle image is displayed in an emphasized manner.

A fifteenth aspect of the present disclosure is a non-transitory storage medium storing a program executable by a computer to perform vehicle display control processing, the processing including: in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher, effecting display, at a display region provided at the vehicle, of a preceding vehicle image simulating the preceding vehicle and a preceding-preceding vehicle image simulating the preceding-preceding vehicle, wherein at least one of the preceding vehicle image or the preceding-preceding vehicle image is displayed in an emphasized manner.

According to the disclosure, it is possible to make a vehicle occupant aware of a warning pertaining to a vehicle ahead of a preceding vehicle.

### BRIEF DESCRIPTION OF THE DRAWINGS

Fig. 1 is a schematic view schematically illustrating a front portion of a vehicle cabin of a vehicle according to a first embodiment in a state viewed from a vehicle rear side.
Fig. 2 is a block diagram illustrating a hardware configuration of a vehicle display control device according to the first embodiment.
Fig. 3 is a block diagram illustrating a functional configuration of a vehicle display control device according to the first embodiment.
Fig. 4 is a flowchart illustrating an example of a flow of warning display processing according to the first embodiment.
Fig. 5A is a diagram illustrating an example of an outline of a warning display displayed at a conventional display unit.
Fig. 5B is a diagram illustrating an example of an outline of a warning display displayed at a conventional display unit.
Fig. 6A is a diagram illustrating an example of an outline of a warning display displayed at a display unit according to the first embodiment.
Fig. 6B is a diagram illustrating an example of an outline of a warning display displayed at the display unit according to the first embodiment.
Fig. 7 is a diagram illustrating a variant example of an outline of a warning display displayed at the display unit according to the first embodiment.
Fig. 8 is a diagram illustrating an example of an outline of a warning display displayed at a display unit according to a second embodiment.
Fig. 9 is an explanatory diagram for explaining a virtual viewpoint according to a variant example of the second embodiment.
Fig. 10 is a diagram illustrating an example of an outline of a warning display displayed at a display unit according to a third embodiment.
Fig. 11 is a diagram illustrating a variant example of an outline of a warning display displayed at the display unit according to the third embodiment.

### DETAILED DESCRIPTION

In the following, a vehicle display control device 10 according to the present embodiment is explained with reference to the drawings. Here, in the respective drawings, the same reference numerals are allocated to the same or equivalent configurational elements. Further, in the drawings, dimension ratios may be exaggerated to aid explanation and may differ from actual ratios. Further, the present disclosure is not limited to the following embodiments in any way, and may be implemented with appropriate modifications within the scope of the object of the present disclosure.

### [First Embodiment]

A vehicle 12 (also referred to as a host vehicle) to which a vehicle display control device 10 according to a first embodiment is applied is explained with reference to the drawings. In a first embodiment, a case of performing warning display is explained in which a warning is displayed with respect to a preceding vehicle image simulating a preceding vehicle that is not the subject of a warning in a case in which sudden deceleration of a vehicle ahead of the preceding vehicle, which is traveling in front of the preceding vehicle, is detected. The vehicle 12 is an example of a "vehicle".

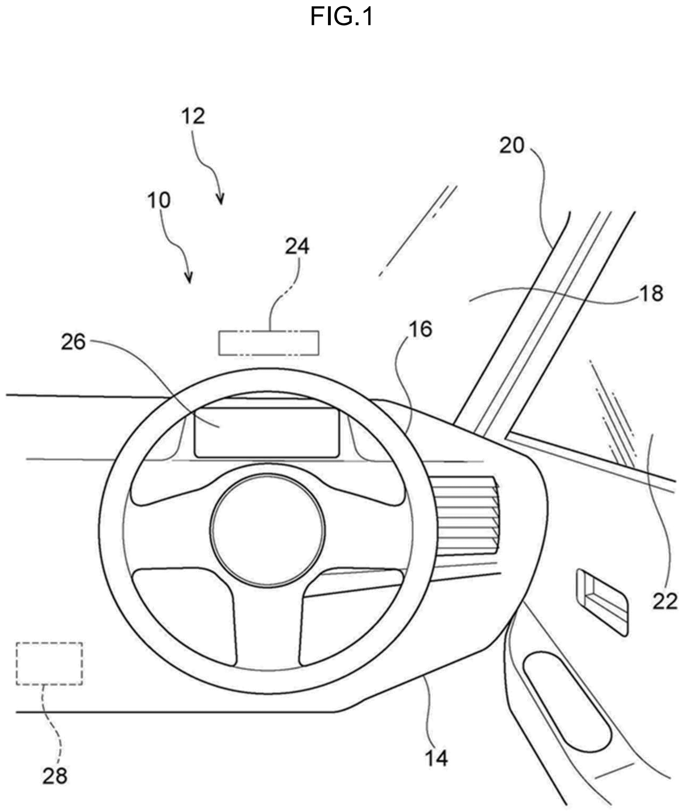

As illustrated in Fig. 1, an instrument panel 14 is provided at the front of a vehicle cabin interior of a vehicle 12. The instrument panel 14 extends in the vehicle width direction, and a steering wheel 16 is provided at the vehicle right side of the instrument panel 14. That is, in the present embodiment, as an example, a right-hand drive vehicle is used in which the steering wheel 16 is provided on the right side, and the driver's seat is located at the right side of the vehicle.

A windshield glass 18 is provided at a front end portion of the instrument panel 14. The windshield glass 18 extends in the vehicle vertical direction and the vehicle width direction, and separates the vehicle cabin interior from the vehicle exterior.

The vehicle right end portion of the windshield glass 18 is fixed to a front pillar 20 at the right side of the vehicle. The front pillar 20 extends in the vehicle vertical direction, and the windshield glass 18 is fixed to an inner side end portion of the front pillar 20 in the vehicle width direction. Further, a front end portion of a front side window 22 is fixed to an outer side end portion of the front pillar 20 in the vehicle width direction. Here, the vehicle left end portion of the windshield glass 18 is fixed to a front pillar at the left side of the vehicle, which is not illustrated in the drawings.

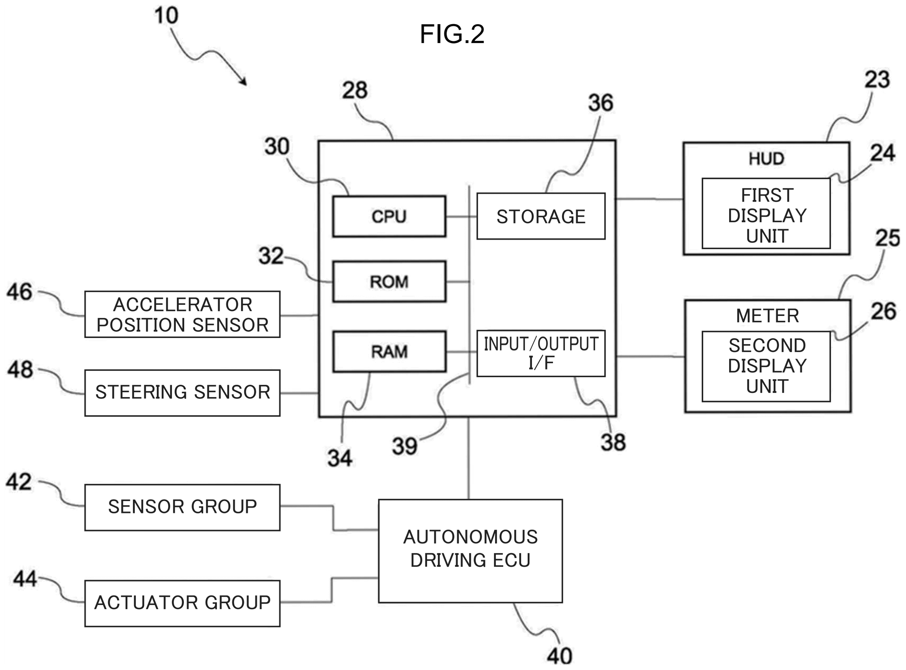

A first display unit 24 is provided at the windshield glass 18. The first display unit 24 is configured by a projection surface onto which an image is projected by the head-up display device 23 illustrated in Fig. 2. Specifically, the configuration is such that a head-up display device 23 is provided further toward a vehicle front side than the instrument panel 14, and an image is projected toward the first display unit 24 of the windshield glass 18 from this head-up display device 23.

A second display unit 26 is provided further toward a vehicle lower side than the first display unit 24. The second display unit 26 is a display unit displayed at a meter 25, and the meter 25 is positioned in the instrument panel 14 at a vehicle front side of the driver's seat. The first display unit 24 and the second display unit 26 are provided in positions visible to the driver. Hereinbelow, in cases in which there is no need to distinguish between the first display unit 24 and the second display unit 26, they are also collectively referred to as the display unit. Further, a vehicle display system is configured by the vehicle display control device 10, the first display unit 24, and the second display unit 26. The first display unit 24 and the second display unit 26 are examples of a "display region provided at the vehicle". In the present embodiment, at least one of the first display unit 24 or the second display unit 26 may be configured to display various images, which are described below. Further, in a case in which the display region of the first display unit 24 is smaller than the display region of the second display unit 26, the first display section 24 may be configured to display a part of the image of the second display section 26.

### (Hardware Configuration of Vehicle Display Control Device 10)

As illustrated in Fig. 2, the vehicle display control device 10 of the present embodiment includes an Electronic Control Unit (ECU) 28.

The ECU 28 includes a central processing unit: processor (CPU) 30, a read-only memory (ROM) 32, a random access memory (RAM) 34, a storage 36 and an input/output interface 38. These respective configurations are intercommunicably connected via a bus 39.

The CPU 30 is a central computation processing unit that executes various programs and controls the respective units. Namely, the CPU 30 readouts a program from the ROM 32 or the storage 36, and executes the program using the RAM 34 as a workspace. Further, the CPU 30 performs control of the respective configurations described above and various types of processing in accordance with programs stored in the ROM 32 or the storage 36.

The ROM 32 stores various programs and various data. The RAM 34 temporarily stores programs and data as a workspace. The storage 36 is configured by a storage medium such as an embedded multi-media card (eMMC) or universal flash storage (UFS), being a non-transitory storage medium that stores various programs including an operating system and various data. In the present embodiment, the ROM 32 or the storage 36 stores a program for performing various kinds of processing, or the like. Further, various input/output devices are connected to the input/output interface 38.

The ECU 28 is electrically connected to an autonomous driving ECU 40. Similarly to the ECU 28, the autonomous driving ECU 40 includes a CPU, a ROM, a RAM, a storage, an input/output interface, and the like, which are not illustrated.

The autonomous driving ECU 40 is connected to a group of sensors 42 that detect the current state of the vehicle and to a group of actuators 44 that control the travel of the vehicle. Plural sensors of various types such as cameras, radar, light detection and ranging, or laser imaging detection and ranging (LIDAR), and global positioning system (GPS) sensors and the like are included in the sensor group 42. A camera captures the surroundings of the vehicle. Radar uses radio waves to detect the distance to, and direction of, objects in the vehicle surroundings. LIDAR uses laser light to detect the distance to, and direction of, objects around the vehicle. A GPS sensor detects the current location of the vehicle. In addition, the sensor group 42 includes a sensor that detects the state of a vehicle occupant. For example, the sensor group 42 may be configured to include a biological sensor that detects the heart rate and alertness of a vehicle occupant.

The actuator group 44 includes an acceleration/deceleration actuator that adjusts the acceleration/deceleration of the vehicle and a steering actuator that drives a steering device of the vehicle. The autonomous driving ECU 40 performs autonomous driving of the vehicle by controlling operations of the actuator group 44 in accordance with the current situation of the vehicle as detected by the sensor group 42. A storage unit of the autonomous driving ECU 40 stores a planned route indicating a route along which the vehicle is scheduled to travel, and the autonomous driving ECU 40 causes the vehicle to travel along the planned route stored in the storage unit.

An accelerator position sensor 46 and a steering sensor 48 are connected to the ECU 28. The accelerator position sensor 46 is a sensor that detects the position of an accelerator pedal (not illustrated) provided below the driver's seat. Further, the steering sensor 48 is a sensor that detects the load applied to the steering wheel 16 by a vehicle occupant. That is, the steering sensor 48 of the present embodiment does not detect the load in a case in which the steering wheel 16 is operated by the autonomous driving ECU 40 during autonomous driving, and is configured to detect the load in a case in which a vehicle occupant is operating the steering wheel 16.

### (Functional Configuration of Vehicle Display Control Device 10)

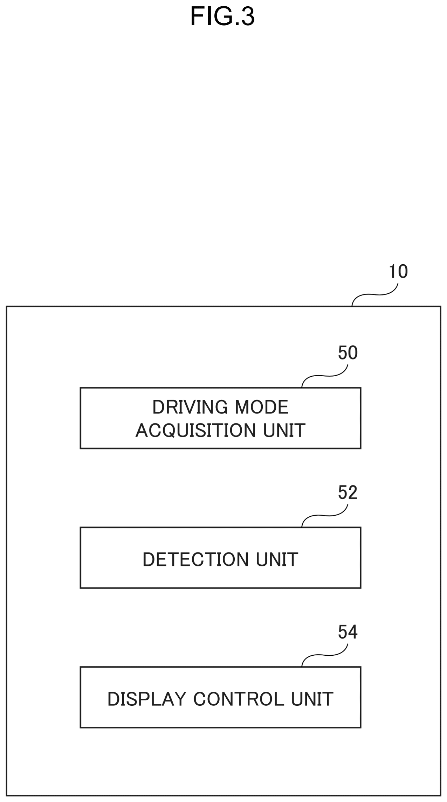

The vehicle display control device 10 implements various functions using the above-described hardware resources. The functional configuration implemented by the vehicle display control device 10 is explained with reference to Fig. 3.

As illustrated in Fig. 3, the vehicle display control device 10 includes, as functional configuration, a driving mode acquisition unit 50, a detection unit 52, and a display control unit 54. Each functional configuration is implemented by the CPU 30 of the ECU 28 reading and executing a program.

The driving mode acquisition unit 50 ascertains which driving mode, from among a manual driving mode or an autonomous driving mode, is the driving mode of the vehicle 12. Here, the manual driving mode in the present embodiment refers to a driving mode whereby the vehicle 12 travels via the intervention of driving operation by a vehicle occupant. Further, the autonomous driving mode in the present embodiment refers to a driving mode whereby the vehicle 12 travels without the intervention of accelerator operation by a vehicle occupant. In the present embodiment, the autonomous driving mode refers, for example, to a state of operation of adaptive cruise control (ACC). ACC is a driving assistance function that uses a camera and radar (for example, a monocular camera and millimeter-wave radar) included in the sensor group 42 to recognize a preceding vehicle and assists in following the vehicle while maintaining a safe distance in accordance with the vehicle speed. The driving mode acquisition unit 50 acquires information related to the driving mode based on a signal from the autonomous driving ECU 40, for example. ACC is an example of a "preceding vehicle tracking function".

The detection unit 52 detects a preceding vehicle traveling ahead of the vehicle 12 and a preceding-preceding vehicle (or pre-preceding vehicle) of the vehicle 12, which is a vehicle traveling ahead of the preceding vehicle. Specifically, the detection unit 52 detects the preceding vehicle and the preceding-preceding vehicle based on signals from the sensor group 42 connected to the autonomous driving ECU 40.

Further, the detection unit 52 detects the relative speed of the preceding-preceding vehicle relative to the vehicle 12. Specifically, the detection unit 52 detects the relative speed of the preceding-preceding vehicle relative to the vehicle 12 based on signals from the sensor group 42 connected to the autonomous driving ECU 40. The detection unit 52 detects, for example, the approach speed of the preceding-preceding vehicle relative to the vehicle 12. Here, the approach speed is a quantity that indicates how much the distance between the vehicle and the detection target vehicle is shortening per unit time, and in a case in which the distance between the vehicle and a detection target vehicle decreases, is expressed as a positive value, while in a case in which the distance increases, is expressed as a negative value.

The display control unit 54 displays information about the surroundings of the vehicle 12 on a display unit provided in the vehicle cabin. Specifically, the display control unit 54 acquires signals from the sensor group 42 and displays, on the display unit, information about the surroundings of the vehicle 12 as seen from a virtual viewpoint based on the acquired signals. Here, the "virtual viewpoint" refers to a viewpoint set in a three-dimensional virtual space with the position of an image illustrating the vehicle as the origin point, and the virtual viewpoint is defined by predetermined viewpoint coordinates and viewpoint angle (orientation) in the virtual space. For example, the virtual viewpoint is a viewpoint that overlooks the vehicle 12 and its surroundings at a specific viewpoint angle from specific viewpoint coordinates located above a vehicle image illustrating the vehicle 12 in the virtual space. The display control unit 54 effects display, for example, of a vehicle image illustrating the vehicle 12, a preceding vehicle image illustrating the preceding vehicle, a preceding-preceding vehicle image illustrating the preceding-preceding vehicle, and a traffic lane image illustrating a vehicle lane in which the vehicle 12 is traveling, at the display unit. The information about the surroundings of the vehicle 12 includes information about the relative positional relationship between the vehicle 12 and a preceding vehicle, and about the relative positional relationship between the vehicle 12 and the preceding-preceding vehicle.

Further, the display control unit 54 also displays information indicating a warning regarding the preceding-preceding vehicle at the display unit. Specifically, the display control unit 54 displays an image on the display unit indicating a warning regarding the preceding-preceding vehicle based on the relative speed of the preceding-preceding vehicle relative to the vehicle 12 detected by the detection unit 52. Hereinbelow, a display in which an image is displayed indicating a warning regarding the preceding-preceding vehicle is referred to as a "warning display". For example, in a case in which the approach speed of the preceding-preceding vehicle relative to the vehicle 12 is equal to or greater than a predetermined threshold value, the display control unit 54 changes and displays at least one of the preceding vehicle image or the preceding-preceding vehicle image so to be displayed together with an image indicating a warning. Here, the predetermined threshold value indicates a speed at which the vehicle 12 cannot be safely decelerated by deceleration control in the autonomous driving mode alone.

### (Warning Display Processing)

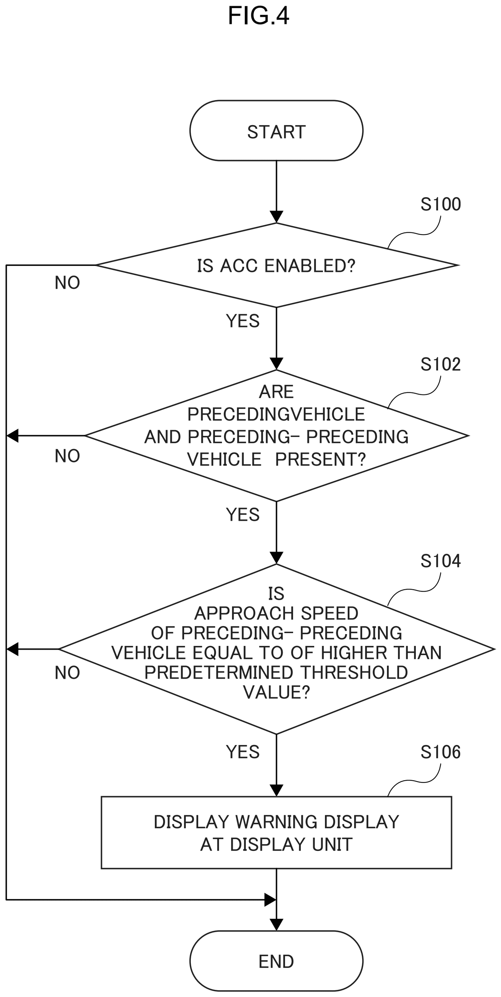

Next, a process for displaying a warning in a case in which the approach speed of the preceding-preceding vehicle is equal to or greater than a predetermined threshold value is explained with reference to Fig. 4. Fig. 4 is a flowchart illustrating an example of the flow of warning display processing according to the first embodiment. The warning display processing is, for example, a process that is repeatedly executed while the vehicle 12 is traveling.

In step S100 of Fig. 4, the CPU 30 determines whether or not ACC is enabled. Specifically, the CPU 30 acquires the driving mode of the vehicle 12 and determines whether or not the acquired driving mode is an autonomous driving mode. In a case in which the CPU 30 determines that ACC is enabled (step S100: YES), the process proceeds to step S102. However, in a case in which the CPU 30 determines that ACC is not enabled (step S100: NO), the CPU 30 ends the warning display processing.

In step S102, the CPU 30 determines whether or not a preceding vehicle and a preceding-preceding vehicle are present. Specifically, the CPU 30 determines whether or not a preceding vehicle, and a preceding-preceding vehicle, traveling ahead of the vehicle 12 have been detected. In a case in which the CPU 30 determines that a preceding vehicle and a preceding-preceding vehicle are present (step S102: YES), the process proceeds to step S104. However, in a case in which the CPU 30 determines that a preceding vehicle and a preceding-preceding vehicle are not present (step S102: NO), the CPU 30 ends the warning display processing. The CPU 30 may also terminate the warning display processing in a case in which it determines that a preceding vehicle is present but a vehicle ahead of the preceding vehicle is not present.

In step S104, the CPU 30 determines whether or not the approach speed of the preceding-preceding vehicle is equal to or greater than a predetermined threshold value. Specifically, the CPU 30 determines whether or not the approach speed of the preceding-preceding vehicle relative to the vehicle 12 is equal to or greater than a predetermined threshold value. In a case in which the CPU 30 determines that the approach speed of the preceding-preceding vehicle is equal to or greater than the predetermined threshold value (step S104: YES), the process proceeds to step S106. However, in a case in which the CPU 30 determines that the approach speed of the preceding-preceding vehicle is not equal to or greater than the predetermined threshold (step S104: NO), the CPU 30 ends the warning display processing.

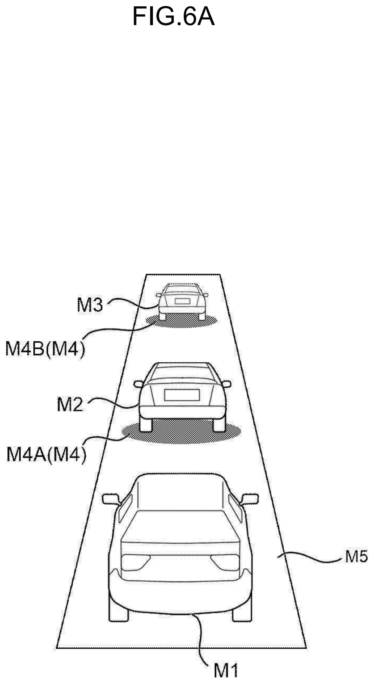

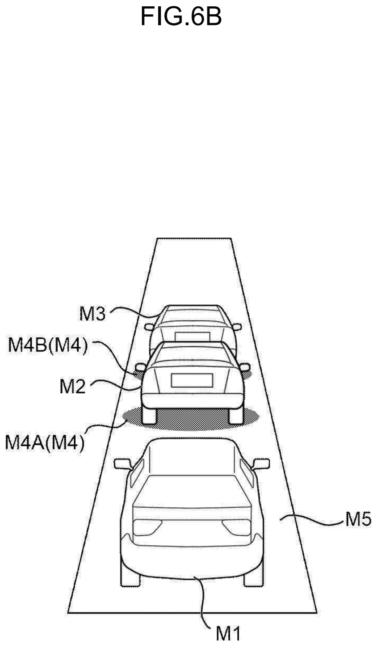

In step S106, the CPU 30 displays a warning display at the display unit. Specifically, the CPU 30 causes the display unit to display various display screens, which are described below. The CPU 30 displays a warning display at the display unit in which, for example, a warning image is displayed at a lower portion of the preceding vehicle image and the preceding-preceding vehicle image (see Figs. 6A and 6B, for example). Then, the CPU 30 ends the warning display processing. Further, while the vehicle 12 is traveling, the CPU 30 repeatedly returns to step S100 and executes the warning display processing.

### (Warning Display)

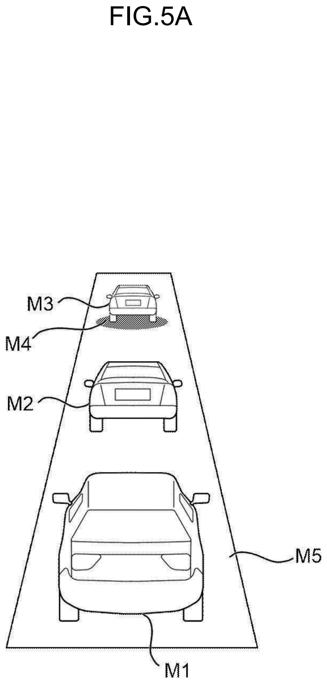

Next, a display screen for a warning display that displays the preceding vehicle image and the preceding-preceding vehicle image in a mode changed to a mode that indicates a warning is explained with reference to Figs. 5A to 7. The warning display of the present embodiment is a display that is displayed at a part of the display unit at a time at which the vehicle 12 is in the autonomous driving mode. In the following explanation, the vertical direction indicates the vertical direction of the display unit, and the left-right direction indicates the left-right direction of the display unit.

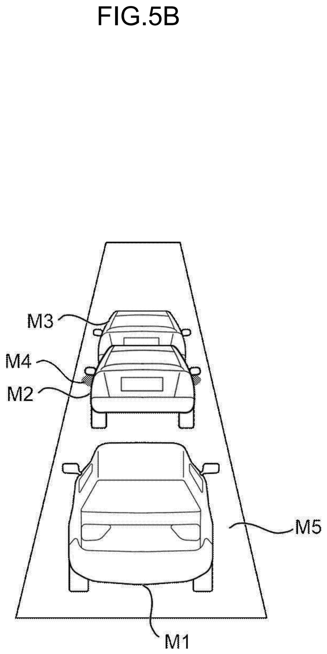

Fig. 5A and Fig. 5B are diagrams illustrating examples of outlines of warning displays displayed at a conventional display unit. As illustrated in Fig. 5A, the display unit displays a vehicle image M1, a preceding vehicle image M2, a preceding-preceding vehicle image M3, a warning image M4, and a traffic lane image M5. Fig. 5A and Fig. 5B are examples of displays in a case in which the approach speed of the preceding-preceding vehicle relative to the vehicle 12 is equal to or greater than a predetermined threshold, and while the preceding vehicle is not the subject of a warning, the preceding-preceding vehicle is the subject of a warning.

The vehicle image M1 is an image that simulates the vehicle. The vehicle image M1 is displayed at a bottom portion of the display unit, superimposed on the traffic lane image M5. Further, in a case of a positional relationship in which the vehicle image M1 is displayed overlapping with the preceding vehicle image M2 and the preceding-preceding vehicle image M3, the vehicle image M1 is displayed superimposed on the preceding vehicle image M2 and the preceding-preceding vehicle image M3.

The preceding vehicle image M2 is an image that simulates a preceding vehicle. The preceding vehicle image M2 is displayed superimposed on the traffic lane image M5. Further, the preceding vehicle image M2 is displayed with its display position and size changed in accordance with the relative positional relationship between the vehicle 12 and the preceding vehicle. For example, as the relative positional relationship between the vehicle 12 and the preceding vehicle becomes further removed, the preceding vehicle image M2 is displayed with reduced size in the upward direction of the display unit. In a case of a positional relationship in which the preceding vehicle image M2 is displayed overlapping with the preceding-preceding vehicle image M3, the preceding vehicle image M2 is displayed superimposed on the preceding-preceding vehicle image M3. In other words, the preceding vehicle image M2 is displayed as if the preceding vehicle is traveling on the traffic lane image M5, simulating the traveling state of the preceding vehicle.

The preceding-preceding vehicle image M3 is an image that simulates a preceding-preceding vehicle. The preceding-preceding vehicle image M3 is displayed superimposed on the traffic lane image M5. Further, the preceding-preceding vehicle image M3 is displayed with its display position and size changed in accordance with the relative positional relationship between the vehicle 12 and the preceding-preceding vehicle. For example, as the relative positional relationship between the vehicle 12 and the preceding-preceding vehicle becomes further removed, the preceding-preceding vehicle image M3 is displayed with reduced size in the upward direction of the display unit. In other words, the preceding-preceding vehicle image M3 is displayed as if the preceding vehicle is traveling on the traffic lane image M5, simulating the traveling state of the preceding-preceding vehicle.

In a case in which the preceding vehicle is not the subject of a warning, and the preceding-preceding vehicle is the subject of a warning, the conventional warning image M4 is displayed at a lower portion of the preceding-preceding vehicle image M3 indicating the preceding-preceding vehicle that is the subject of the warning. The warning image M4 is displayed in a state superimposed on the traffic lane image M5 and with the preceding-preceding vehicle image M3 superimposed thereon. The warning image M4 is displayed in red, for example.

The traffic lane image M5 is displayed with the vehicle image M1, the preceding vehicle image M2, the preceding-preceding vehicle image M3, and the warning image M4 superimposed thereon. The traffic lane image M5 is displayed as a dark red trapezoid, for example.

In this way, the warning image M4 is displayed at a lower portion of the preceding-preceding vehicle image M3, indicating that the preceding-preceding vehicle is a vehicle that is the subject of a warning. Further, by displaying the traffic lane image M5 in dark red, it is indicated that a warning has been issued. Here, a case in which the relative distance between the preceding vehicle and the preceding-preceding vehicle decreases and the preceding vehicle image M2 and the preceding-preceding vehicle image M3 are displayed overlapping with each other is explained with reference to Fig. 5B.

As illustrated in Fig. 5B, in the case of a positional relationship in which the preceding vehicle image M2 and the preceding-preceding vehicle image M3 are displayed overlapping with each other, the preceding vehicle image M2 is displayed superimposed on the preceding-preceding vehicle image M3 and the warning image M4. By displaying the preceding vehicle image M2 superimposed on the preceding-preceding vehicle image M3 and the warning image M4, the display area of the warning image M4 is reduced, which makes it difficult for a vehicle occupant to recognize that a warning display is being implemented with respect to the preceding-preceding vehicle image M3, and a situation may arise in which the warning regarding the preceding-preceding vehicle is not perceived by the vehicle occupant.

Therefore, the vehicle display control device 10 of the first embodiment, in a case in which the preceding vehicle is not the subject of a warning, and the preceding-preceding vehicle is the subject of a warning, also effects display of a warning related to the preceding-preceding vehicle at the preceding vehicle image M2. The display screen of the warning display of the first embodiment is explained below.

Fig. 6A and Fig. 6B are diagrams illustrating examples of outlines of warning displays displayed at the display unit according to the first embodiment. Fig. 6A and Fig. 6B are examples of displays in a case in which the approach speed of the preceding-preceding vehicle relative to the vehicle 12 is equal to or greater than a predetermined threshold, and while the preceding vehicle is not the subject of a warning, the preceding-preceding vehicle is the subject of a warning. The differences from Figs. 5A and 5B are explained below.

As illustrated in Fig. 6A, the warning image M4 of the present embodiment includes a warning image M4A displayed at a lower portion of the preceding vehicle image M2, and a warning image M4B displayed at a lower portion of the preceding-preceding vehicle image M3. That is, in a case in which it is detected that the approach speed of the preceding-preceding vehicle relative to the vehicle 12 is equal to or greater than a predetermined threshold value, the warning image M4A and the warning image M4B are displayed. Hereinafter, in cases in which there is no need to distinguish between the warning image M4A and the warning image M4B, they are also collectively referred to as the warning image M4. Displaying the warning image M4 at a lower portion is an example of "effecting display in an emphasized manner".

The warning image M4A is displayed at a lower portion of the preceding vehicle image M2, which illustrates the preceding vehicle traveling behind the preceding-preceding vehicle that is the subject of the warning. In this way, by adding the warning image M4A to the bottom of the preceding vehicle image M2, the preceding vehicle image M2 is displayed in an emphasized manner. Further, the warning image M4B is displayed at a lower portion of the preceding-preceding vehicle image M3, which indicates the preceding-preceding vehicle that is the subject of the warning. In this way, by adding the warning image M4B to the bottom of the preceding-preceding vehicle image M3, the preceding-preceding vehicle image M3 is displayed in an emphasized manner.

In this way, by displaying the warning image M4A at a lower portion of the preceding vehicle image M2 and the warning image M4B at a lower portion of the two-vehicles-ahead image M3, it is possible to notify a vehicle occupant that they need to be careful of at least the vehicle ahead of the vehicle 12.

Further, as illustrated in Fig. 6B, even in a case in which the distance between the preceding vehicle and the preceding-preceding vehicle decreases and the preceding vehicle image M2 and the preceding-preceding vehicle image M3 are displayed overlapping with each other, since the warning image M4A is displayed at a lower portion of the preceding vehicle image M2, the vehicle occupant may determine that a warning pertaining to a vehicle ahead of the vehicle 12 is being displayed.

Further, it is not necessary to display both the warning image M4A and the warning image M4B in the warning display. For example, in a case in which the preceding vehicle image M2 and the preceding-preceding vehicle image M3 are displayed separately from each other, the warning image M4 is displayed only below the preceding-preceding vehicle image M3 as illustrated in Fig. 5A. Further, in a case in which the preceding vehicle image M2 and the preceding-preceding vehicle image M3 are displayed overlapping with each other, the warning image M4A may be displayed at a lower portion of the preceding vehicle image M2 and the warning image M4B may be displayed at a lower portion of the preceding-preceding vehicle image M3 as illustrated in Fig. 6B.

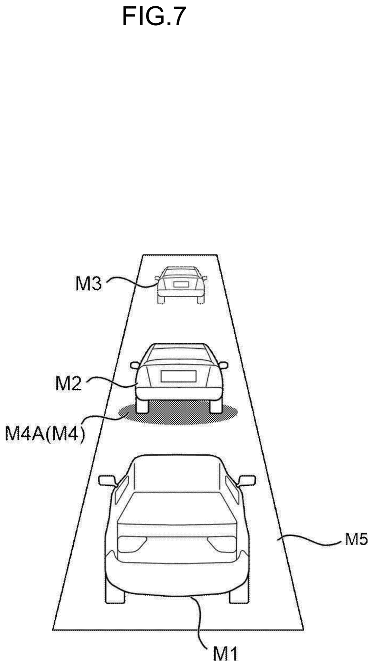

Further, for example, in the warning display, as illustrated in Fig. 7, only the warning image M4A may be displayed without displaying the warning image M4B. By displaying the warning image M4A at least below the preceding vehicle image M2 as illustrated in Fig. 7, even in a case in which the preceding vehicle image M2 and the preceding-preceding vehicle image M3 are displayed overlapping with each other, a vehicle occupant may recognize that a warning has been issued.

### (Overview of First Embodiment)

The vehicle display control device 10 of the first embodiment detects that the ACC of the vehicle 12 is enabled, and that a preceding vehicle and a preceding-preceding vehicle are present in the traffic lane in which the vehicle 12 is traveling, and in a case in which it is detected that the approach speed of the preceding-preceding vehicle relative to the vehicle 12 is equal to or greater than a predetermined threshold value, effects display of a preceding vehicle image M2 and a warning image M4A at a lower portion of the preceding vehicle image M2, and also effects display of a preceding-preceding vehicle image M3, at a display unit provided in the vehicle 12. Therefore, according to the vehicle display control device 10 of the present embodiment, a vehicle occupant may be made aware of a warning pertaining to a preceding-preceding vehicle. Further, according to the vehicle display control device 10 of the present embodiment, by effecting display of a warning image M4A pertaining to the preceding-preceding vehicle at a lower portion of the preceding vehicle image M2, the driver's attention may be directed ahead.

The vehicle display control device 10 of the first embodiment effects display of the warning image M4A at a lower portion of the preceding vehicle image M2, and effects display of a warning image M4B at a lower portion of the preceding-preceding vehicle image M3. Therefore, according to the vehicle display control device 10 of the present embodiment, the vehicle occupant may recognize that care is required in relation to vehicles ahead of the vehicle 12, including a preceding-preceding vehicle.

The vehicle display control device 10 of the first embodiment effects display of the warning image M4A at a lower portion of the preceding vehicle image M2 in a case in which the preceding vehicle image M2 and the preceding-preceding vehicle image M3 are displayed overlapping with each other. Therefore, according to the vehicle display control device 10 of the present embodiment, since the warning image M4A is displayed at a lower portion of the preceding vehicle image M2, which is displayed superimposed on the preceding-preceding vehicle image M3, the attention of a vehicle occupant may be directed to the group consisting of the preceding vehicle and the preceding-preceding vehicle.

### [Second Embodiment]

The vehicle display control device 10 of a second embodiment, in the case of positional relationships in which the vehicle image M1, the preceding vehicle image M2, and the preceding-preceding vehicle image M3 are displayed overlapping with each other, effects display of the vehicle image M1, the preceding vehicle image M2, and the preceding-preceding vehicle image M3 at separate positions so as to avoid overlap. Explanation follows regarding points of difference from the first embodiment. Further, the remaining configuration is the same as in the above-described embodiment, and detailed description thereof is omitted.

The display control unit 54 of the second embodiment effects display of the vehicle image M1, the preceding vehicle image M2, and the preceding-preceding vehicle image M3 at separate positions. Specifically, the display control unit 54 effects display with at least a predetermined space provided between the vehicle image M1 and the preceding vehicle image M2, between the vehicle image M1 and the preceding-preceding vehicle image M3, and between the preceding vehicle image M2 and the preceding-preceding vehicle image M3. For example, the display control unit 54 effects display so as to maintain at least a predetermined space for the distance from the top edge of the vehicle image M1 to the bottom edge of the preceding vehicle image M2. Here, the predetermined distance is, for example, a distance at which the vehicle image M1 and the warning image M4A displayed at a lower portion of the preceding vehicle image M2 are displayed without overlapping with each other, and at which the warning image M4A is displayed recognizably. Further, the predetermined space may be an interval indicating the inter-vehicle distances between the vehicle image M1, the preceding vehicle image M2, and the preceding-preceding vehicle image M3 in a three-dimensional virtual space having the position of the vehicle image M1 as the origin point. In a case in which the predetermined space is an interval indicating an inter-vehicle distance, the predetermined space is, for example, an interval equivalent to 5 m. The predetermined space may be dynamically changed depending on the positions at which the preceding vehicle image M2 and the preceding-preceding vehicle image M3 are displayed.

### (Warning Display)

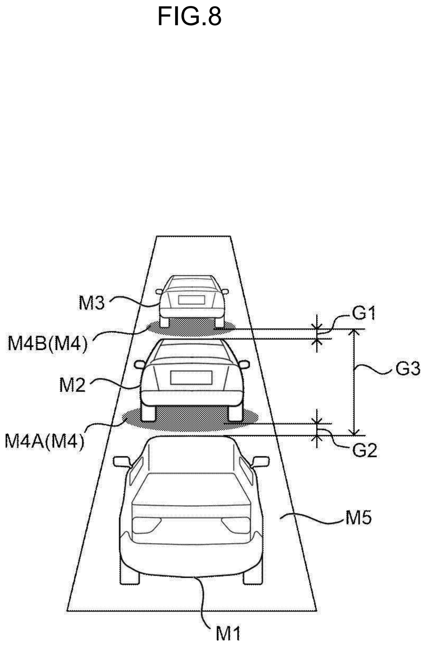

Fig. 8 is a diagram illustrating an example of an outline of a warning display displayed at a display unit according to the second embodiment.

As illustrated in Fig. 8, the vehicle image M1, the preceding vehicle image M2, and the preceding-preceding vehicle image M3 are displayed spaced apart in the vertical direction. Here, a gap G1 indicates a space in the vertical direction between the preceding vehicle image M2 and the preceding-preceding vehicle image M3. Further, a gap G2 indicates a space in the vertical direction between the vehicle image M1 and the preceding vehicle image M2. Further, a gap G3 indicates the gap in the vertical direction between the vehicle image M1 and the preceding-preceding vehicle image M3.

Specifically, the gap G1 is the distance from the top edge of the preceding vehicle image M2 to the bottom edge of the preceding-preceding vehicle image M3. The gap G1 is set at an interval that allows at least the warning image M4B displayed at a lower portion of the preceding-preceding vehicle image M3 to be displayed without overlapping with the preceding vehicle image M2.

Specifically, the gap G2 is the distance from the top edge of the vehicle image M1 to the bottom edge of the preceding vehicle image M2. The gap G2 is set at an interval that allows at least the warning image M4A displayed at a lower portion of the preceding vehicle image M2 to be displayed without overlapping with the vehicle image M1.

Specifically, the gap G3 is the distance from the top edge of the vehicle image M1 to the bottom edge of the preceding-preceding vehicle image M3. The gap G3 is set at an interval that allows at least the entire preceding vehicle image M2 to be displayed.

In this way, by displaying each of the vehicle image M1, the preceding vehicle image M2, and the preceding-preceding vehicle image M3 with spaces opened therebetween in the vertical direction, a vehicle occupant may easily recognize the warning image M4.

### (Overview of Second Embodiment)

The vehicle display control device 10 of the second embodiment displays the preceding vehicle image M2 and the preceding-preceding vehicle image M3 so as to maintain the gap G1 between the preceding vehicle image M2 and the preceding-preceding vehicle image M3 at a distance at which the warning image M4B does not overlap with the preceding vehicle image M2. Therefore, according to the vehicle display control device 10 of the present embodiment, a vehicle occupant may perceive the entire preceding-preceding vehicle image M3 including the warning image M4B displayed at a lower portion of the preceding-preceding vehicle image M3.

The vehicle display control device 10 of the second embodiment displays the vehicle image M1 and the preceding vehicle image M2 so as to maintain the gap G2 between the vehicle image M1 and the preceding vehicle image M2 at a distance at which the warning image M4A does not overlap with the vehicle image M1. Therefore, according to the vehicle display control device 10 of the present embodiment, a vehicle occupant may perceive the entire preceding vehicle image M2 including the warning image M4A displayed at a lower portion of the preceding vehicle image M2.

The vehicle display control device 10 of the second embodiment displays the vehicle image M1 and the preceding-preceding vehicle image M3 so as to maintain the gap G3 between the vehicle image M1 and the preceding-preceding vehicle image M3 at a distance that allows the entire preceding vehicle image M2 to be displayed. Therefore, according to the vehicle display control device 10 of the present embodiment, since the vehicle image M1 and the preceding-preceding vehicle image M3 are displayed with a sufficient space opened between them, a vehicle occupant may easily perceive the state of the preceding-preceding vehicle image M3.

### (Variant Example of Second Embodiment)

The vehicle display control device 10 of a variant example of the second embodiment, by changing the coordinates and viewpoint angle of the virtual viewpoint, effects display of the vehicle image M1, the preceding vehicle image M2, and the preceding-preceding vehicle image M3 at separate positions so as to avoid overlap.

The display control unit 54 of a variant example of the second embodiment, when displaying the vehicle image M1, the preceding vehicle image M2, and the preceding-preceding vehicle image M3, effects display by changing the viewpoint coordinates and viewpoint angle of the virtual viewpoint. Specifically, in the case of positional relationships in which the vehicle image M1, the preceding vehicle image M2, and the preceding-preceding vehicle image M3 are displayed overlapping with each other, the display control unit 54 effects display of the vehicle image M1, the preceding vehicle image M2, and the preceding-preceding vehicle image M3 at separated positions by setting the viewpoint coordinates of the virtual viewpoint higher and lowering the viewpoint angle. Further, the display control unit 54 only needs to change at least either one of the viewpoint coordinates or the viewpoint angle. The viewpoint coordinates and viewpoint angle of the virtual viewpoint are an example of an "angle".

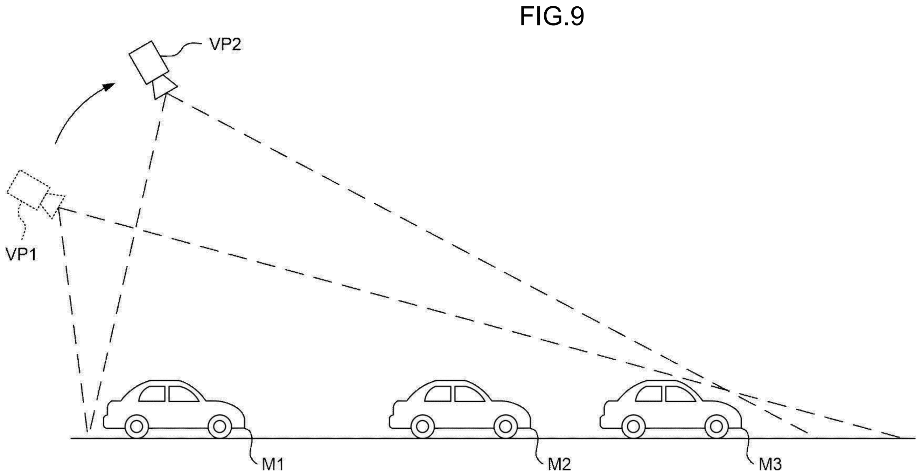

Fig. 9 is an explanatory diagram for explaining a virtual viewpoint according to the variant example of the second embodiment. Fig. 9 is a diagram of a case in which a three-dimensional virtual space having the position of the vehicle image M1 as the point of origin is viewed from a lateral direction of the vehicle image M1.

As illustrated in Fig. 9, when a preceding vehicle image M2 and a preceding-preceding vehicle image M3 are displayed overlapping with each other at a virtual viewpoint VP1, the viewpoint coordinates and viewpoint angle of the virtual viewpoint are changed to the viewpoint coordinates and viewpoint angle illustrated at a virtual viewpoint VP2. The virtual viewpoint VP2 is a virtual viewpoint at an angle that looks down on the vehicle image M1, the preceding vehicle image M2, and the preceding-preceding vehicle image M3 from a higher position than the virtual viewpoint VP1. Therefore, owing to the visual effect when viewed from the virtual viewpoint VP2, compared to the display when viewed from the virtual viewpoint PV1, display may be effected of a state with a gap opened between the vehicle image M1 and the preceding vehicle image M2, and a gap opened between the preceding vehicle image M2 and the preceding-preceding vehicle image M3.

The vehicle display control device 10 of the variant example of the second embodiment displays the preceding vehicle image M2 and the preceding-preceding vehicle image M3 with a positional relationship of a case viewed from the virtual viewpoint VP2 having viewpoint coordinates and a viewpoint angle such that the preceding vehicle image M2 and the preceding-preceding vehicle image M3 do not overlap. Therefore, according to the vehicle display control device 10 of the present embodiment, since display is effected of the preceding vehicle image M2 and the preceding-preceding vehicle image M3 at separated positions while continuing to reflect the positional relationship between the preceding vehicle and the preceding-preceding vehicle, a vehicle occupant may separately perceive the state of the preceding vehicle image M2 and the state of the preceding-preceding vehicle image M3.

### [Third Embodiment]

In a third embodiment, in a case of a positional relationship in which the preceding vehicle image M2 and the preceding-preceding vehicle image M3 are displayed overlapping with each other, an icon indicating a warning (hereinafter, also referred to as a warning icon) is displayed above the preceding-preceding vehicle image M3. Differences from the first embodiment and the second embodiment are explained below. Further, the remaining configuration is the same as in the above-described embodiment, and detailed description thereof is omitted.

### (Warning Display)

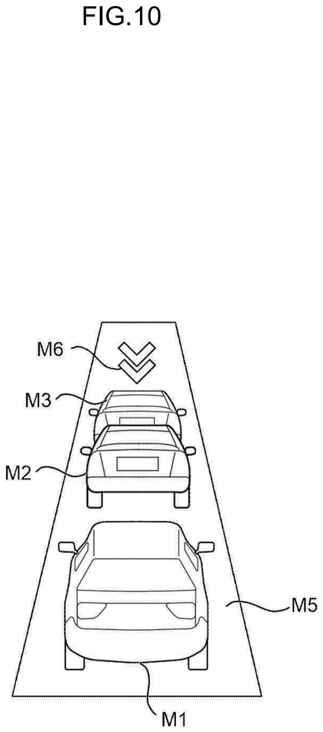

Fig. 10 is a diagram illustrating an example of an outline of a warning display displayed at a display unit according to the third embodiment. Fig. 10 illustrates a warning display that is displayed in a case in which, for example, from a state in which the warning display illustrated in Fig. 5A is in effect, a positional relationship occurs in which the preceding vehicle image M2 and the preceding-preceding vehicle image M3 are displayed overlapping with each other.

As illustrated in Fig. 10, instead of displaying the warning image M4B at a lower portion of the preceding-preceding vehicle image M3, a warning icon M6 is displayed above the preceding-preceding vehicle image M3. Displaying the warning image M4B is an example of effecting "display in an emphasized manner of a first aspect". Displaying the warning icon M6 is an example of effecting "display in an emphasized manner of a second aspect".

The warning icon M6 is displayed above the preceding-preceding vehicle image M3. Further, the warning icon M6 is displayed superimposed on the traffic lane image M5. Further, the warning icon M6 is displayed as if it is floating above the preceding-preceding vehicle image M3, and is displayed moving in accordance with movement of the preceding-preceding vehicle image M3. In this way, by adding the warning icon M6 above the preceding-preceding vehicle image M3, the preceding-preceding vehicle image M3 is displayed in an emphasized manner. The warning icon M6 is displayed as an image of two V-shaped figures arranged vertically, for example.

In this way, in a case in which the preceding vehicle image M2 and the preceding-preceding vehicle image M3 are displayed overlapping with each other, by displaying the warning icon M6 above the preceding-preceding vehicle image M3, a vehicle occupant may easily perceive a warning related to the preceding-preceding vehicle image M3.

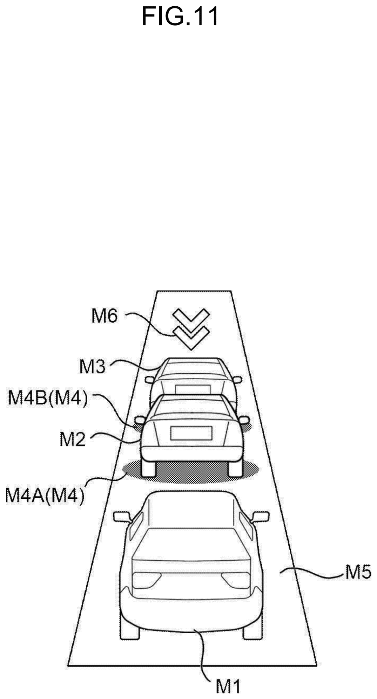

In addition, in the warning display, the warning image M4A and the warning image M4B may be displayed together with the warning icon M6. For example, in the warning display, in a case in which the preceding vehicle image M2 and the preceding-preceding vehicle image M3 are displayed overlapping with each other as illustrated in Fig. 11, the warning image M4A may be displayed at a lower portion of the preceding vehicle image M2, the warning image M4B may be displayed at a lower portion of the preceding-preceding vehicle image M3, and the warning icon M6 may be displayed above the preceding-preceding vehicle image M3.

### (Overview of Third Embodiment)

The vehicle display control device 10 of the third embodiment detects that the ACC of the vehicle 12 is enabled, and that a preceding vehicle and a preceding-preceding vehicle are present in the traffic lane in which the vehicle 12 is traveling, and in a case in which it is detected that the approach speed of the preceding-preceding vehicle relative to the vehicle 12 is equal to or greater than a predetermined threshold value, effects display of a preceding vehicle image M2 at a display unit provided in the vehicle 12, and effects display of a preceding-preceding vehicle image M3 and of a warning image M4B at a lower portion of the preceding-preceding vehicle image M3. Further, the vehicle display control device 10, in a case of a positional relationship in which the preceding vehicle image M2 and the preceding-preceding vehicle image M3 are displayed overlapping with each other, effects display of the warning icon M6 above the preceding-preceding vehicle image M3. Therefore, according to the vehicle display control device 10 of the present embodiment, a vehicle occupant may be made aware of a warning pertaining to a preceding-preceding vehicle.

### [Other Embodiments]

In the above-described embodiments, the vehicle display control device 10, by additional display such as display of the warning images M4 and display of the warning icon M6, effects display of the preceding vehicle image M2 and the preceding-preceding vehicle image M3 in an emphasized manner. However, there is no limitation to this, and the vehicle display control device 10 may display the preceding vehicle image M2 and the preceding-preceding vehicle image M3 by changing an aspect thereof. The vehicle display control device 10 may effect display of the preceding vehicle image M2 and the preceding-preceding vehicle image M3 in an emphasized manner by, for example, changing the brightness, color, shape, or the like of the preceding vehicle image M2 and the preceding-preceding vehicle image M3, or adding movements such as blinking, vibration, and zooming in and out.

In addition, the configurations of the vehicle display control device 10 as explained in the foregoing embodiments are simply examples, and may be changed depending on the situation within a scope that does not depart from the gist of the invention. Further, the processing flows of the programs explained in the foregoing embodiments are also simply examples, and unnecessary steps may be eliminated, new steps may be added, or the processing order may be switched, within a scope that does not depart from the gist of the invention. Further, the warning display aspects of the above-described embodiments are simply examples, and may be freely combined within a scope that does not depart from the gist of the invention.

Further, in the above-described embodiments, any of various types of processors other than a CPU may execute the various processing that the CPU executes by reading out software (programs). Examples of such processors include a programmable logic device (PLD) in which circuit configuration can be modified post-manufacture, such as a field-programmable gate array (FPGA), or a specialized electric circuit that is a processor with a specifically-designed circuit configuration for executing specific processing, such as an application specific integrated circuit (ASIC).

Further, in each of the above-described embodiments, aspects have been described in which an information processing program is pre-stored (installed) in a storage; however, there is no limitation thereto. The program may be provided in a format stored in a storage medium such as compact disc read only memory (CD-ROM), digital versatile disc read only memory (DVD-ROM), or universal serial bus (USB) memory. Alternatively, the program may be provided in a format downloaded from an external device through a network. The present disclosure may also be applied to programs and program products.

## Claims

1. A vehicle display control device, comprising:
a memory (32,34); and
a processor (30) that is configured to:
in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher,
effect display, at a display region (24,26) provided at the vehicle, of a preceding vehicle image (M2) simulating the preceding vehicle and a preceding-preceding vehicle image (M3) simulating the preceding-preceding vehicle, wherein at least one of the preceding vehicle image or the preceding-preceding vehicle image is displayed in an emphasized manner.

2. The vehicle display control device of claim 1, wherein the processor (30) is further configured to effect display of the preceding vehicle image (M2) in an emphasized manner, at the display region (24,26) provided at the vehicle.

3. The vehicle display control device of claim 1, wherein the processor (30) is further configured to:
effect display of the preceding-preceding vehicle image (M2) in a first emphasized manner, at the display region (24,26) provided at the vehicle, and
in a case in which the preceding vehicle image (M2) and the preceding-preceding vehicle image (M3) are in a positional relationship such that they are displayed overlapping with each other, effect display of the preceding-preceding vehicle image in a second emphasized manner different from the first emphasized manner.

4. The vehicle display control device of claims 1 to 3, wherein the processor (30) is further configured to effect display of both of the preceding vehicle image (M2) and the preceding-preceding vehicle image (M3) in an emphasized manner.

5. The vehicle display control device of claims 1 to 4, wherein the processor (30) is further configured to effect display of the preceding vehicle image (M2) in an emphasized manner, in a case in which the preceding vehicle image and the preceding-preceding vehicle image (M3) are in a positional relationship such that they are displayed overlapping with each other.

6. The vehicle display control device of claims 1 to 5, wherein:
the preceding vehicle image (M2) comprises an image simulating the preceding vehicle when the preceding vehicle is viewed from a predetermined virtual viewpoint,
the preceding-preceding vehicle image (M3) comprises an image simulating the preceding-preceding vehicle when the preceding-preceding vehicle is viewed from the virtual viewpoint, and
the processor (30° is further configured to effect display of the preceding vehicle image (M2) and the preceding-preceding vehicle image (M3) by setting an angle of the virtual viewpoint such that the preceding vehicle image and the preceding-preceding vehicle image do not overlap each other.

7. The vehicle display control device of claims 1 to 6, wherein the processor (30) is further configured to effect display such that at least a predetermined distance is maintained between the preceding vehicle image (M2) and the preceding-preceding vehicle image (M3).

8. The vehicle display control device of claims 1 to 7, wherein the processor (30) is further configured to:
effect display of a vehicle image (M1) simulating the vehicle, and
effect display such that at least a predetermined distance is maintained between the vehicle image and the preceding vehicle image (M2).

9. The vehicle display control device of claims 1 to 8, wherein the processor (30) is further configured to:
effect display of a vehicle image (M1) simulating the vehicle, and
effect display such that at least a predetermined distance is maintained between the vehicle image (M1) and the preceding-preceding vehicle image (M3).

10. A method of vehicle display control comprising a processing executed by a computer, the processing comprising:
in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher,
effecting display, at a display region (24,26) provided at the vehicle, of a preceding vehicle image (M2) simulating the preceding vehicle and a preceding-preceding vehicle image (M3) simulating the preceding-preceding vehicle, wherein at least one of the preceding vehicle image or the preceding-preceding vehicle image is displayed in an emphasized manner.

11. The method of claim 10, wherein the processing further comprising:
effecting display of the preceding vehicle image (M2) in an emphasized manner, at the display region (24,26) provided at the vehicle.

12. The method of claim 10, wherein the processing further comprising:
effecting display of the preceding-preceding vehicle image (M3) in a first emphasized manner, at the display region provided (24,26) at the vehicle, and
in a case in which the preceding vehicle image (M2) and the preceding-preceding vehicle image (M3) are in a positional relationship such that they are displayed overlapping with each other, effecting display of the preceding-preceding vehicle image in a second emphasized manner different from the first emphasized manner.

13. A non-transitory storage medium storing a program executable by a computer to perform vehicle display control processing, the processing comprising:
in a case in which it has been detected that a preceding vehicle tracking function of a vehicle is enabled and that a preceding vehicle traveling ahead of the vehicle in a vehicle lane in which the vehicle is traveling, and a preceding-preceding vehicle traveling ahead of the preceding vehicle, are present, and it is detected that an approach speed of the preceding-preceding vehicle relative to the vehicle is a predetermined threshold value or higher,
effecting display, at a display region (24,26) provided at the vehicle, of a preceding vehicle image (M2° simulating the preceding vehicle and a preceding-preceding vehicle image (M3) simulating the preceding-preceding vehicle, wherein at least one of the preceding vehicle image or the preceding-preceding vehicle image is displayed in an emphasized manner.

14. The non-transitory storage medium of claim 13, wherein the processing further comprising:
effecting display of the preceding vehicle image (M2) in an emphasized manner, at the display region (24,26) provided at the vehicle.

15. The non-transitory storage medium of claim 13, wherein the processing further comprising:
effecting display of the preceding-preceding vehicle image (M3) in a first emphasized manner, at the display region (24,26) provided at the vehicle, and
in a case in which the preceding vehicle image (M2) and the preceding-preceding vehicle image (M3) are in a positional relationship such that they are displayed overlapping with each other, effecting display of the preceding-preceding vehicle image in a second emphasized manner different from the first emphasized manner.
